(19) **Europäisches Patentamt**
**European Patent Office**
**Office européen des brevets**

(11) **EP 2 193 620 B1**

(12) **FASCICULE DE BREVET EUROPEEN**

(45) Date de publication et mention
de la délivrance du brevet:
**11.01.2012 Bulletin 2012/02**

(51) Int Cl.:
*H04L 1/00* (2006.01)     *H04L 1/18* (2006.01)

(21) Numéro de dépôt: **08786415.3**

(22) Date de dépôt: **24.07.2008**

(86) Numéro de dépôt international:
**PCT/EP2008/059754**

(87) Numéro de publication internationale:
**WO 2009/037038 (26.03.2009 Gazette 2009/13)**

(54) **PROCEDE ET EQUIPEMENT DE TRANSMISSION DE DONNEES DEPUIS L'INFRASTRUCTURE D'UN RESEAU DE RADIOCOMMUNICATION VERS DES EQUIPEMENTS UTILISATEUR**

VERFAHREN UNE GERÄT ZUM ÜBERTRAGEN VON DATEN AUS EINER INFRASTRUKTUR EINES FUNKKOMMUNIKATIONSNETZES ZU BENUTZERGERÄTEN

METHOD AND APPARATUS FOR TRANSMITTING DATA FROM THE INFRASTRUCTURE OF A RADIO-COMMUNICATION NETWORK TO USER EQUIPMENT

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **21.09.2007 FR 0757748**

(43) Date de publication de la demande:
**09.06.2010 Bulletin 2010/23**

(73) Titulaire: **Alcatel Lucent**
**75008 Paris (FR)**

(72) Inventeurs:
• **SAYADI, Bessem**
**F-92330 Sceaux (FR)**

• **ALBERI MOREL, Marie-Line**
**F-94230 Cachan (FR)**
• **KERBOEUF, Sylvaine**
**F-91140 Villebon-sur-Yvette (FR)**
• **ROULLET, Laurent**
**F-91440 Bures (FR)**

(74) Mandataire: **Ameline, Jean-Paul B.C. et al**
**Alcatel-Lucent**
**Intellectual Property & Standards**
**54, rue La Boétie**
**75008 Paris (FR)**

(56) Documents cités:
**EP-A- 1 580 917     EP-A- 1 708 404**
**WO-A-2007/060589**

**Description**

La présente invention se rapporte à un procédé de transmission de données depuis une infrastructure d'un réseau de radiocommunication vers des équipements utilisateur, ainsi que des équipements pour la mise en oeuvre de ce procédé.

Elle trouve avantageusement application dans le contexte de diffusion vers des équipements utilisateur de contenus multimédia, par exemple vidéo. Les systèmes DVB (en anglais « Digital Video Broadcasting »), standardisés par l'ETSI, sont des exemples de tels systèmes de diffusion. Les systèmes DVB-H et DVB-SH, en cours de spécification, viennent complémenter les fonctionnalités du système de diffusion terrestre DVB-T en offrant la possibilité de diffuser un contenu multimédia vers des terminaux mobiles. Les systèmes DVB-T et DVB-H sont décrit dans les documents ETSI TR 101 190 v1:2.1, intitulé « Digital Video Broadcasting (DVB) ; Implementation guidelines for DVB terrestrial services ; Transmission aspects », publié par l'ETSI en novembre 2004 et ETSI EN 302 304 v1.1.1, intitulé « Digital Vidéo Broadcasting (DVB) ; Transmission System for Handheld Terminals (DVB-H) », et publié par l'ETSI en novembre 2004, respectivement, auxquels on pourra se reporter.

Dans le cadre de la transmission de contenus multimédia vers des mobiles, offrir une qualité de service perçue par l'utilisateur (qualité visuelle satisfaisante, faible taux d'interruption de service) satisfaisante reste la difficulté principale pour les opérateurs de service de diffusion. Les phénomènes d'évanouissement (« fading ») que subit tout signal transmis sur un canal de propagation de l'interface air provoquent une dégradation de qualité du signal reçu contre laquelle les techniques de codage canal couramment employées dans les systèmes de radiocommunications numériques permettent dans une certaine mesure de se protéger.

Les techniques de codage canal comportent de manière classique une ou plusieurs étapes d'encodage afin de protéger les données à transmettre contre les erreurs de transmission, et une ou plusieurs étapes d'entrelacement des flux encodés de manière à obtenir qu'une erreur de transmission affecte des symboles distribués sur un ensemble donné au lieu d'affecter un groupe de symboles adjacents. L'encodage s'effectue selon un code correcteur d'erreurs (en anglais FEC, pour « Forward Error Protection »), comme par exemple un code de Reed-Solomon ou toute autre technique de codage par blocs.

Les codes de Reed-Soloman sont un exemple de codes en bloc utilisés pour le codage correcteur d'erreurs dans des systèmes de transmission de données. Les codes en bloc sont caractérisés par le fait que le code correcteur d'erreur est calculé sur un bloc, segment ou une trame de données de longueur prédéterminée. Un code de Reed-Solomon est couramment désigné par un couple de paramètres (n,k) dans lequel n correspond à la taille en symboles (un symbole étant typiquement un octet de 8 bits) du mot de code, et k à la taille du bloc de données à encoder, de sorte qu'un mot de code de traille n symboles correspond à k symboles de données et n-k symboles de redondance (aussi appelés symboles de parité). Le rapport k/n correspond au taux de codage du code de Reed-Solomon, Le nombre maximum d'erreurs sur symbole qui peuvent être corrigées par un code de Reed-Solomon (n,k) est donné par le rapport (n-k)/2. Le nombre maximum d'effacements de symbole qui peuvent être corrigées par un code de Reed-Solomon (n,k) est égal à n-k. Par exemple, pour une séquence de 100 octets à laquelle on adjoint 10 octets de redondance, le décodeur Reed-Solomon pourra récupérer jusqu'à 10 octets perdus (du fait, par exemple, des phénomènes d'évanouissement évoqués plus haut). La capacité de correction de pertes de symboles est mesurée par le rapport 1/(n-k).

Lorsque les pertes de données ou les erreurs observées sur les données reçues dépassent la capacité de correction des codes correcteurs d'erreurs employés, on peut avoir recours à des retransmissions des données perdues ou erronées, par exemple dans le cadre de procédures de requête

automatique de répétition (ARQ Autornatic Repeat reQuest) pour les systèmes de transmission de données utilisant des mécanismes d'acquittement.

Les systèmes de diffusion actuels n'offrant par nature pas de voie de communication montante, dite « voie de retour», du terminal récepteur vers l'infrastructure de diffusion, ou bien une voie de retour d'un débit trop faible pour envisager de l'utiliser pour émettre des requêtes de retransmission de données qui s'avèrent efficaces, il est actuellement envisagé des systèmes faisant coopérer une infrastructure de diffusion et une infrastructure de réseau cellulaire de radiocommunication, de manière à profiter des débits offerts, notamment sur la voie montante, entre une station mobile et une infrastructure de réseau cellulaire de radiocommunication

Le document US 2006128422 décrit un procédé d'interfonctionnement entre un système cellulaire et un système de diffusion basé sur la qualité de service observée par la station mobile: La station mobile négocie une qualité de service avec un fournisseur de service qui contrôle la fourniture des contenus multimédia. Le fournisseur de service décide de fournir les contenus multimédia à la station mobile par le biais du système cellulaire ou celui du système de diffusion.

Le document WO 2007/060589 décrit un procédé de transmission de données dans un système DVB vers des équipements utilisateur, lesdites données étant portées par une séquence de trames comprenant une première section comportant des données et une deuxième section comportant des informations de redondance associées aux données de trames précédentes dans la séquence.

Le document intitulé « A satellite based multicast layer architecture for mobile networks to provide efficient spectrum usage of IMT2000 bands » publié par Alcatel en janvier 2002 (et disponible à l'adresse URL cordis.europa.eu/ist/ka4/mobile/ password/ 02/20_aspi_ ecc_pt1_35.pdf) propose d'utiliser un réseau cellulaire pour effectuer la retransmission des portions perdues de flux de contenus multimédia diffusés par un système S-DMB (Satellite Digital Multimedia Broadcasting). Cette procédure est basée sur le protocole intitulé « Flute », et ne prend pas en compte les contraintes temps-réel imposées par la fourniture d'un flux multimédia vers un terminal mobile. Ces contraintes se retrouvent cependant lorsqu'il s'agit de mettre en oeuvre un procédé de correction d'erreurs efficace qui optimise l'expérience utilisateur en augmentant la qualité de service perçue.

Un but principal de l'invention est d'apporter une solution qui soit plus performante à cet égard.

L'invention propose ainsi un procédé de transmission de données depuis une infrastructure d'un réseau de radiocommunication vers des équipements utilisateur, lesdites données étant portées par une séquence de trames diffusées vers les équipements utilisateur, chaque trame comprenant une première section comportant des données et une deuxième section comportant des informations de redondance associées aux données d'un nombre prédéterminé B de trames précédentes dans la séquence. Le procédé comprend les étapes suivantes, relativement à un équipement utilisateur :

/a/ comparer un nombre de trames consécutives perdues à un seuil dépendant du nombre B de trames précédentes auxquelles lesdites informations de redondance sont associées et des paramètres de l'encodage générant lesdites informations de redondance ;

/b/ émettre vers l'infrastructure de réseau de radiocommunication une requête de retransmission d'au moins une parmi les trames consécutives perdues si le nombre de trames consécutives perdues excède ledit seuil.

Par trame on entend un ensemble de données organisé selon un format déterminé associé à un mode de transmission.

Dans un mode particulier de réalisation de l'invention, le seuil dépend de B et du taux de codage de l'encodage générant lesdites informations de redondance. Il peut par exemple être choisi égal à : $B \times \dfrac{1-T}{T}$,

où T désigne le taux de codage de l'encodage générant lesdites informations de redondance. L'encodage générant les informations de redondance peut par ailleurs être un encodage en bloc des données des premières sections des B trames précédentes dans la séquence.

D'autre part, la requête de retransmission si le nombre de trames consécutives perdues excède le seuil peut avoir pour objet la première trame perdue dans la séquence de trames consécutives perdues.

Dans un autre mode particulier de réalisation de l'invention, l'infrastructure de réseau de radiocommunication comprend une infrastructure de réseau de diffusion de contenu multimédia et une infrastructure de réseau cellulaire de radiocommunication, et les équipements utilisateur sont aptes à recevoir des contenus diffusés par l'infrastructure de réseau de diffusion de contenu multimédia et à communiquer avec infrastructure de réseau cellulaire de radiocommunication. Les trames portant les données sont diffusées vers les équipements utilisateur par l'infrastructure de réseau de diffusion de contenu multimédia, et la requête de retransmission d'au moins une parmi les trames consécutives perdues est émise vers l'infrastructure de réseau cellulaire de radiocommunication. L'infrastructure de réseau de diffusion de contenu multimédia peut être de type DVB-H ou DVB-SH, et l'infrastructure de réseau cellulaire de radiocommunication de type UMTS, LTE ou WiMAX.

L'invention propose aussi un dispositif de radiocommunication, comprenant des moyens d'émission et de réception pour communiquer avec une infrastructure d'un réseau de radiocommunication transmettant des données vers des équipements utilisateur, lesdites données étant portées par une séquence de trames diffusées vers les équipements utilisateurs, chaque trame comprenant une première section comportant des données et une deuxième section comportant des informations de redondance associées aux données des B trames précédentes dans la séquence. Le dispositif selon l'invention comprend en outre des moyens de réception et de décodage desdites trames aptes à déterminer la perte de trames consécutives de la séquence, des moyens de comparaison du nombre de trames consécutives de la séquence perdues à un seuil dépendant du nombre B de trames précédentes auxquelles lesdites informations de redondance sont associées et des paramètres de l'encodage générant lesdites informations de redondance, et des moyens d'émission vers l'infrastructure de réseau de radiocommunication d'une requête de retransmission d'au moins une parmi les trames consécutives perdues si le nombre de trames consécutives perdues excède ledit seuil.

Dans un mode particulier de réalisation de l'invention, les moyens de comparaison sont adaptés pour comparer le nombre de trames consécutives perdues à un seuil dépendant du nombre B de trames précédentes auxquelles lesdites informations de redondance sont associées et du taux de codage de l'encodage générant lesdites informations de redondance. Ils peuvent être aussi adaptés pour comparer le nombre de trames consécutives perdues à un seuil choisi égal à : $B \times \dfrac{1-T}{T}$,

où T désigne le taux de codage de l'encodage générant lesdites informations de redondance.

Par ailleurs, les moyens d'émission peuvent être adaptés pour émettre vers l'infrastructure de réseau de radiocommunication une requête de retransmission de la première trame perdue dans la séquence de trames consécutives perdues si le nombre de trames consécutives perdues excède le seuil.

Dans un autre mode particulier de réalisation de l'invention, les moyens d'émission et de réception sont aptes à recevoir des contenus multimédia diffusés par une infrastructure de réseau de diffusion de contenu multimédia et à communiquer avec une infrastructure de réseau cellulaire de radiocommunication, les moyens de réception et de décodage des trames adaptés pour recevoir et décoder des trames portant des données diffusées vers des équipements utilisateur par l'infrastructure de réseau de diffusion de contenu multimedia, et les moyens d'émission vers l'infrastructure de réseau de radiocommunication d'une requête de retransmission adaptés pour émettre la requête de retransmission vers l'infrastructure de réseau cellulaire de radiocommunication. L'infrastructure de réseau de diffusion de contenu multimédia peut être de type DVB-H ou DVB-SH, et l'infrastructure de réseau cellulaire de radiocommunication de type UMTS, LTE ou WiMAX.

Ce dispositif de radiocommunication selon l'invention peut avantageusement être intégré dans une station mobile de radiocommunication.

L'invention propose enfin un programme d'ordinateur chargeable dans une mémoire associée à un processeur, et comprenant des instructions pour la mise en oeuvre d'un procédé tel que défini ci-dessus lors de l'exécution dudit programme par le processeur, ainsi qu'un support informatique sur lequel est enregistré ledit programme.

D'autres particularités et avantages de la présente invention apparaîtront dans la description ci-après d'exemples de réalisation non limitatifs, en référence aux dessins annexés, dans lesquels :

- la figure 1 montre l'architecture d'un système hybride de transmission de contenus multimédia auquel l'invention peut avantageusement s'appliquer ;
- la figure 2 est un schéma synoptique d'un noeud IPE d'une infrastructure de réseau de diffusion DVB ;
- la figure 3 illustre l'application d'un premier encodage de type FEC à une séquence de symboles dans une infrastructure de réseau de diffusion DVB ;
- la figure 4 illustre l'application d'un deuxième encodage de type FEC appliqué à des trames MPE-FEC dans une infrastructure de réseau de diffusion DVB ;
- la figure 5 est un schéma synoptique d'un équipement utilisateur mettant en oeuvre la présente invention selon un mode de réalisation particulier ;
- la figure 6 représente de manière schématique un exemple d'algorithme pour la mise en oeuvre de l'invention selon un mode de réalisation particulier.

L'invention est particulièrement bien adaptée, bien que de manière non exclusive, à un système hybride comprenant un réseau de diffusion de contenus multimédia de type DVB-H ou DVB-SH, et un réseau de radiocommunication cellulaire de type UMTS, et est décrite ci-après dans son application à un tel système. En outre, on considère dans ce qui suit, à titre d'exemple non limitatif, que les contenus multimédia diffusés vers les équipements utilisateur sont des vidéos. L'invention n'est cependant pas limitée à ce type de contenu, et concerne en effet tout type de contenu multimédia, et notamment les programmés de télévision ou de radio et les contenus audio.

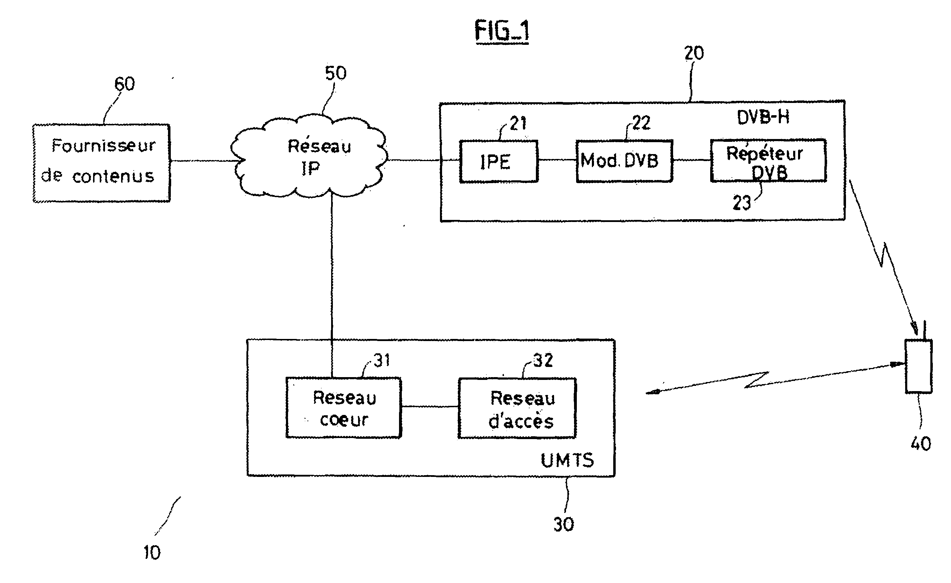

Cette application est illustrée par la Figure 1, qui montre un système 10 qui comprend un réseau 20 de diffusion de contenu multimédia de type DVB-H ou DVB-SH, et un réseau 30 de radiocommunication cellulaire de type UMTS.

Le réseau 30 cellulaire de radiocommunication comprend un réseau coeur UMTS 31, connecté à un ou plusieurs réseaux fixes 50 d'une part, ainsi qu'à un réseau d'accès radio UMTS 32 (UTRAN, « UMTS Radio Access Network ») d'autre part, au moyen d'une interface dite *Iu.* Le réseau UTRAN 32 comprend des stations de base, appelées « Node-B », réparties sur le territoire de couverture du réseau UTRAN, et capables de communiquer par radio avec les équipements utilisateurs 40. Il comprend par ailleurs des équipements de contrôle de réseau radio, ou RNC ("Radio Network Controller"), chaque RNC étant relié à une ou plusieurs stations de base au moyen d'une interface dite *Iub.*

Le réseau 20 de diffusion de contenu multimédia comprend un noeud IPE 21 (« IP Encapsulateur ») qui transpose un flux d'entrée de datagrammes IP (« Internet Protocol ») transportant les contenus multimédia en un flux de transport DVB en utilisant un procédé dit d'encapsulation multi-protocole (en anglais MPE, pour « Multi-Protocol Encapsulation »). Le flux de transport DVB est ensuite transmis au modulateur DVB-T 22, après avoir éventuellement été multiplexé avec d'autres flux de service DVB. Le modulateur DVB-T 22 met en forme les signaux reçus en vue de leur émission sur l'interface air, éventuellement par l'intermédiaire du répéteur 23, vers les équipements utilisateurs 40.

Le réseau 20 de diffusion de contenu multimédia et le réseau 30 cellulaire de radiocommunication sont connectés à un réseau IP 50, par l'intermédiaire du noeud IPE 21 et du réseau coeur 31, respectivement. Les contenus multimédia diffusés vers les équipements utilisateur sont fournis par un noeud fournisseur de contenu 60, connecté lui aussi au réseau IP 50.

L'équipement utilisateur 40 est multi-mode en ce qu'il est propre à communiquer avec le réseau de diffusion 20 et avec le réseau cellulaire de radiocommunication 30. On considère, dans ce qui suit, à titre d'exemple non limitatif, le cas d'un terminal de communication multi-mode UMTS/DVB. Mais l'invention n'est pas limitée à ce type d'équipement utilisateur et trouve à s'appliquer à tout équipement de communication fixe ou mobile (ou portable ou encore cellulaire) apte à communiquer avec une infrastructure d'un réseau de radiocommunication transmettant des données vers des équipements utilisateur, lesdites données étant portées par une séquence de trames diffusées vers les équipements utilisateur. Par conséquent, il pourra également s'agir d'un téléphone fixe, d'un ordinateur fixe ou portable, d'un récepteur de contenus multimédia en couches (par exemple un décodeur, une passerelle résidentielle (ou « residential gateway ») ou un STB (« Set-Top Box »)), dès lors qu'il est équipé de moyens de communication, éventuellement radio ou satellitaires, aptes à la communication avec une infrastructure de réseau de communication transmettant des données vers des équipements utilisateur, lesdites données étant portées par une séquence de trames diffusées vers les équipements utilisateur.

La chaine de transmission du réseau 20 de diffusion DVB comporte des éléments des couches 1 et 2 du modèle ISO, La couche 2 (liaison de données) comprend un étage de codage canal, qui réalise un encodage de type FEC (« Forward Error Correction ») sur les données à transmettre. Cette couche liaison de données se trouve par exemple dans le noeud IPE 21.

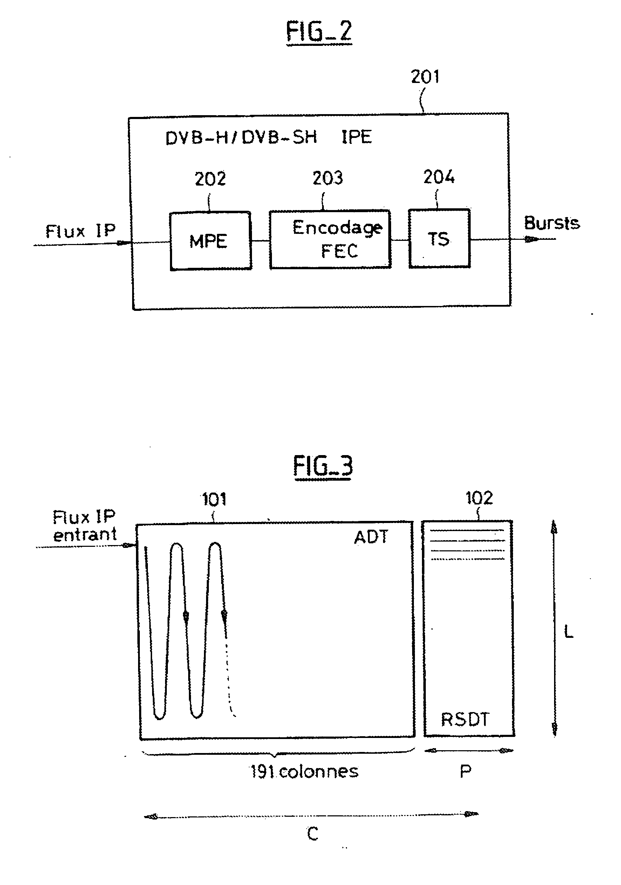

La figure 2 illustre les différentes opérations effectuées au sein d'un noeud IPE 201 dans le cadre de l'exemple de réalisation de l'invention décrit ci-après.

Le flux entrant de datagrammes (ou paquets) IP est traité par des moyens d'encapsulation, qui encapsulent les datagrammes IP entrant dans des blocs, appelés sections MPE (« MPE sections »). Chaque section MPE contient un en-tête, un datagramme IP encapsulé, ainsi que des bits de parité obtenus par calcul d'un code de détection d'erreur CRC (en anglais « Cyclic Redundancy Check ») sur le datagramme IP et l'en-tête, Ces moyens d'encapsulation correspondent au module MPE 202 sur la figure 2.

La figure 3 illustre l'application d'un premier encodage de type FEC à une séquence de symboles (dans l'exemple particulier de réalisation de l'invention décrit ci-après, on considère qu'un symbole est un octet binaire) correspondant à un ensemble de paquets de données multimédia à encoder. La séquence d'entrée du codeur canal est organisée en mémoire selon une matrice logique de D colonnes représentée sur la figure 2 (D = 191 pour DVB-H ou DVB/SH), en remplissant la matrice logique 101 avec les octets de la séquence d'entrée colonne par colonne, comme illustré sur la figure 2. Dans ce qui suit on entend par « matrice », « matriciel » ou « matrice logique », une organisation logique des données aux fins d'un traitement spécifique qui ne présuppose en rien de l'organisation des données dans une mémoire lorsque le traitement est effectivement mis en oeuvre au sein d'un dispositif. Les données à encoder sont ainsi organisées logiquement en mémoire selon une matrice 101 appelée ADT (« Application Data Table »). Le nombre L de lignes de la matrice logique ADT dépend de la longueur de la séquence d'entrée (L=256, 512, 768 ou 1024 pour DVB-H ou DVB-SH). Les données de la matrice logique ADT 101 sont encodées ligne par ligne, par calcul d'un vecteur de symboles de parité pour chaque ligne. L'un des objets de cette organisation logique matricielle est l'application d'un code en bloc aux vecteurs de données constituées des lignes de la matrice logique ADT 101. L'encodage des lignes peut s'effectuer selon toute méthode de codage en bloc connue en soi, comme par exemple un encodage de type Reed-Solomon ou LDPC. On adjoint ainsi à la matrice logique ADT une matrice logique de symboles de parité, appelée RSDT, dont chaque ligne correspond à un vecteur de symboles de parité résultant d'un encodage, par exemple de type Reed-Solomon (C,D), de la ligne correspondante de la matrice logique ADT. Le nombre de colonnes de la matrice logique RSDT 102 est égal à C - D (C = 255 pour DVB-H ou DVB/SH). Les lignes de la matrice logique RSDT 102 sont aussi appelées FEC internes (en anglais « inner FEC »), du fait qu'elles protègent contre les erreurs de transmission les données d'une matrice logique ADT 101, avec une capacité de correction d'erreurs sur symboles (un symboles étant, dans cet exemple, un octet) égale à T = (C-D)/2 (soit 32 octets pour DVB-H ou DVB-SH). La matrice logique combinant les matrices logiques ADT 101 et RSDT 102 est par ailleurs appelée trame MPE-FEC.

Le premier encodage de type FEC appliqué aux sections MPE en sortie du module MPE 202 est effectué au sein du module d'encodage FEC 203, et produit une séquence de trames MPE-FEC MPE-FEC$_k$ d'indice séquentiel $k$.

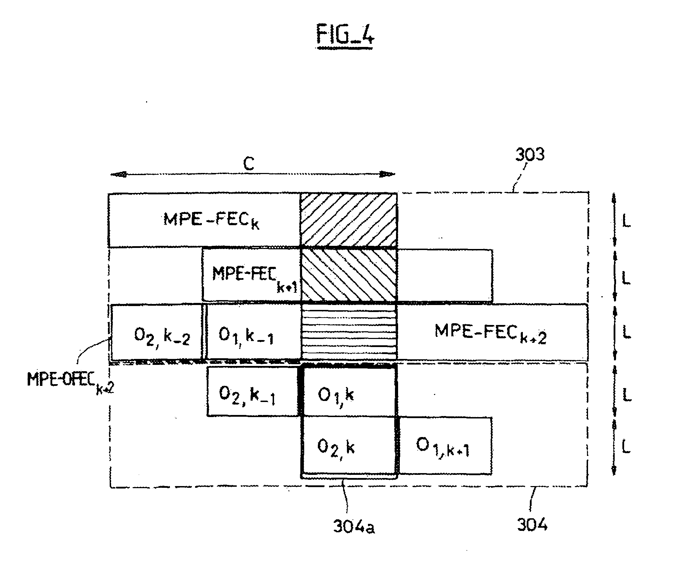

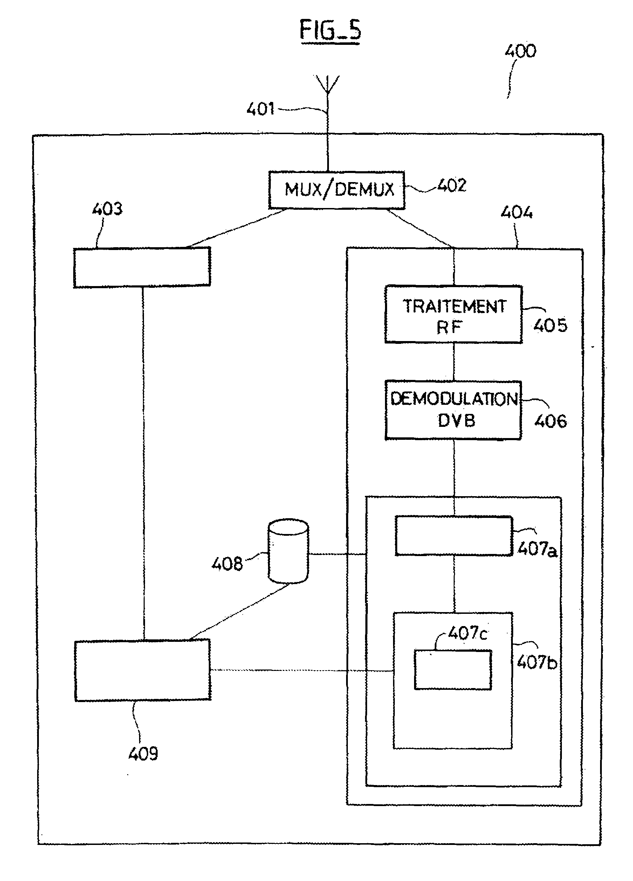

La figure 4 illustre l'application d'un deuxième encodage de type FEC appliqué aux trames MPE-FEC. Dans l'exemple illustré, les données de B trames MPE-FEC consécutives selon l'ordre de séquence où elles sont produites par le module d'encodage MPE-FEC 203, sont mémorisées avec une organisation logique illustrée à la figure 5. B est de préférence choisi parmi les diviseurs de C. On écrit les données de B trames MPE-FEC consécutives dans une matrice logique en bloc de dimensions (2*B-1)*C/B colonnes, et B*L lignes. Les données de chaque trame MPE-FEC sont écrites en respectant leur organisation logique matricielle dans la matrice en bloc en appliquant à la trame de séquence j un décalage de L*j lignes, et un décalage de (C*j)/B colonnes, j étant un entier allant de 0 à B-1. L'un des objets de cette organisation logique matricielle est l'application d'un code en bloc aux vecteurs de données constituées des éléments des colonnes de la matrice logique en bloc 303, colonnes elles-mêmes constituées des cotonnes de B trames MPE-FEC consécutives organisées en matrice logique. L'encodage des colonnes peut s'effectuer selon toute méthode de codage en bloc connue en soi, comme par exemple un encodage de type Reed-Solomon ou LDPC. On adjoint ainsi à la matrice logique en bloc une matrice logique 304 de symboles de parité (autrement appelés symboles de redondance), dont chaque colonne correspond à un vecteur de symboles de parité résultant d'un encodage, par exemple de type Reed-Solomon ((2*B-1)*C/B + S*L, (2*-B-1:)*C/B), de la colonne correspondante de la matrice logique en blocs 303. La matrice logique de parité 304, de dimensions S*L lignes et (2*B-1)*C/B colonnes peut être considérée comme une matrice logique en bloc comprenant 2*B-1 blocs de dimensions S*L lignes, et C/B colonnes. Le bloc 304a de dimensions S*L lignes et C/B colonnes correspond à une sous-matrice comprenant les symboles de parité de l'encodage des symboles des colonnes de B trames MPE-FEC consécutives écrites dans la matrice logique en bloc 303. Les colonnes de ces blocs 304a sont aussi appelées FEC externes (en anglais « outer FEC »), du fait qu'elles protègent contre les erreurs de transmission se produisant sur plusieurs trames MPE-FEC. Les données de ces blocs peuvent être organisées en S sous-blocs de dimensions L lignes et C/B colonnes, de manière à adjoindre à une tramé MPE-FEC S sous-blocs portant des symboles de parité des B trames MPE-FEC immédiatement précédentes et des B trames MPE-FEC précédant la trame MPE-FEC immédiatement précédente. On peut aussi, au lieu de générer la matrice logique 304 de symboles de parité, se limiter à ne générer que le bloc 304a de dimensions S*L lignes, et C/B colonnes par encodage des symboles des colonnes de B trames MPE-FEC consécutives écrites dans la matrice logique en bloc 303. La ligure 4 illustre ce mécanisme d'encodage FEC avec B = 3 trames MPE-FEC MPE-FEC$_k$, MPE-FEC$_{k+1}$ et MPE-FEC$_{k+2}$. Dans cet exemple, l'entier C est choisi parmi les multiples de 3. Les données des trois trames MPE-FEC MPE-FEC$_k$, MPE-FEC$_{k+1}$ et MPE-FEC$_{k+2}$ sont écrites dans la matrice logique en blocs 303 en respectant leur organisation logique matricielle décrite précédemment, selon le schéma exposé ci-dessus. La matrice logique en blocs [O$_{1,k}$;O$_{2,k}$] résulte de l'encodage des vecteurs constituées par les colonnes de rang 1+2*C/3 à C pour la trame MPE-FEC MPE-FEC$_k$, de rang 1+C /3 à 2*C /3 pour la trame MPE-FEC MPE-FEC$_{k+1}$, et de rang 1 à C/3 pour la trame MPE-FEC MPE-FEC$_{k+2}$. Les symboles de la sous-matrice O$_{1,k}$ et ceux de la sous-matrice O$_{2,k-1}$ sont adjoints à la trame MPE-FEC MPE-FEC$_{k+1}$, ceux de la sous-matrice O$_{1,k+1}$ et ceux de la sous-matrice O$_{2,k}$ sont adjoints à la trame MPE-FEC MPE-FEC$_{k+2}$, et ainsi de suite. Les trames MPE-FEC auxquelles sont adjoints des sous-blocs de redondance inter-trame MPE-FEC O$_{1,k+j}$ et O$_{2,K+j-1}$ sont appelées trames MPE-OFEC.

Ce deuxième encodage FEC des trames MPE-FEC produites par le premier encodage est effectué au sein du module de d'encodage 203 sur la figure 2.

La transmission des signaux par le système 20 de diffusion de contenus multimédia s'effectue selon un schéma de multiplexage temporel (TDM, « Time Division Multiplex ») de rafales (en anglais « bursts »), une rafale étant émise sur une tranche temporelle d'émission appelée « Time Slot ». Cette technique d'émission des données en rafale permet notamment d'économiser la consommation en puissance des équipements récepteurs, qui peuvent être des terminaux mobiles dont la batterie est une ressource critique qu'il convient d'économiser autant qu'il se peut. Le module TS 204 sur la figure 2 forme des rafales à partir des trames MPE-OFEC qu'il reçoit du module d'encodage FEC 203.

Revenant à la figure 1, les rafales produites par le module IPE 21 sont transmises au modulateur DVB 22 pour être mise en forme en vue d'être émise, éventuellement par l'intermédiaire du répéteur 23 sur l'interface air vers l'équipement utilisateur 40.

La figure 5 est un schéma synoptique d'un équipement utilisateur mettant en oeuvre la présente invention selon un mode de réalisation particulier décrit ci-après.

L'équipement utilisateur 400 représenté sur la figure 5 comprend des moyens 402 de multipexage/démultiplexage des signaux reçus par l'intermédiaire des moyens antenne 401 d'une part du réseau de diffusion, et d'autre part du réseau de radiocommunication cellulaire. Les moyens 402 de multiplexage/demultiplexage transmettent les signaux reçus du réseau de diffusion vers des moyens 404 de traitement réception réseau de diffusion, et les signaux reçus du réseau de radiocommunication cellulaire vers des moyens 403 de traitement émission/réception réseau de radiocommunication cellulaire. Les moyens 403 de traitement émission/réception réseau de radiocommunication cellulaire comprennent des moyens de traitement radio ainsi que des moyens de traitement du signal en bande de base. Les moyens de traitement radio effectuent l'ensemble des traitements radio (amplification, filtrage, égalisation, démodulation...) sur les signaux reçus du réseau de radiocommunication cellulaire sur l'antenne de réception (moyens antenne 401), et transmettent aux moyens de traitement en bande de base un signal numérique démodulé en bande de base. Les moyens 404 de traitement réception réseau de diffusion comprennent des moyens 405 de traitement radio et des moyens 406 de démodulation du signal diffusé. Les moyens 405 de traitement radio effectuent l'ensemble des traitements radio sur les rafales reçues du réseau de diffusion sur les moyens antenne 401, et transmettent aux moyens 406 de démodulation signaux reçus transportant les rafales. Les moyens 406 de démodulation transmettent aux moyens 407 de désencapsulation IP des rafales de données après démodulation des signaux reçus transportant les rafales. Les moyens 407 de désencapsulation IP se chargent des traitements des couches 1 (couche physique) et 2 (liaison de données), et comprennent des moyens 407a de traitement couche physique et des moyens 407b de traitement couche liaison de données. On s'intéresse plus particulièrement dans la suite aux traitements effectués par la couche 2, et plus spécifiquement aux traitements effectués par les moyens 407c de décodage canal compris dans les moyens 407b de traitement couche liaison de données, en coopération avec la mémoire 408.

Les moyens 407a de traitement couche physique traitent les signaux démodulés transportant les rafales reçues des moyens 406 de démodulation pour produire une séquence de trames MPE-OFEC. Les trames MPE-OFEC reçues des moyens 407a de traitement couche physique par les moyens 407b de traitement couche liaison de données sont consignées en mémoire 408 pour être ensuite traitées par les moyens 407c de décodage canal afin de déterminer si elles ont été ou non correctement reçues. Si une trame MPE-OFEC est correctement reçue et qu'une section MPE décodée a pu être produite, le données de la section MPE transportant le contenu multimédia sont transmises aux moyens 409 de lecture de contenu multimédia au moyen par exemple d'un bus de transmission de données interne, éventuellement par l'intermédiaire de la mémoire 408. Si la trame MPE-OFEC n'est pas correctement reçue, elle pourra éventuellement être récupérée soit par correction des erreurs qui l'affectent grâce aux informations de redondance portées par les trames MPE-OFEC suivantes et/ou précédentes, dans la limite de la capacité de correction du code employé. Au-delà, les données perdues pourront être requises par le biais d'une requête en retransmission déclenchée suffisamment rapidement pour que les moyens 409 de lecture de contenu multimédia puissent en bénéficier. Dans ce dernier cas, la requête en retransmission sera émise par les moyens 403 de traitement en émission/réception réseau de radiocommunication cellulaire, en y adjoignant un identifiant des données à ré-èmettre, par exemple un numéro de séquence de trame MPE-OFEC.

Il sera possible dans certaines situations de récupérer, grâce aux informations de redondance « outer-FEC », les données perdues quand bien même celles-ci pourraient correspondre à plusieurs trames MPE-OFEC consécutives, à la condition que la quantité de données perdues n'excède pas la capacité de correction du code correcteur d'erreur utilisé pour l'encodage FEC des trames MPE-FEC. Lorsque la perte d'une trame MPE-OFEC est détectée par les moyens 407c, le numéro de séquence de la trame perdue est consigné en mémoire, et les moyens 407b déclenchent une surveillance destinée à réagir au plus tôt à la perte d'un nombre de trames MPE-OFEC consécutives suffisamment important pour excéder ou être proche d'excéder les capacités de correction du code correcteur d'erreur utilisé pour l'encodage des trames MPE-OFEC par l'émission d'une requête de retransmission de la ou les trame(s) perdue(s).

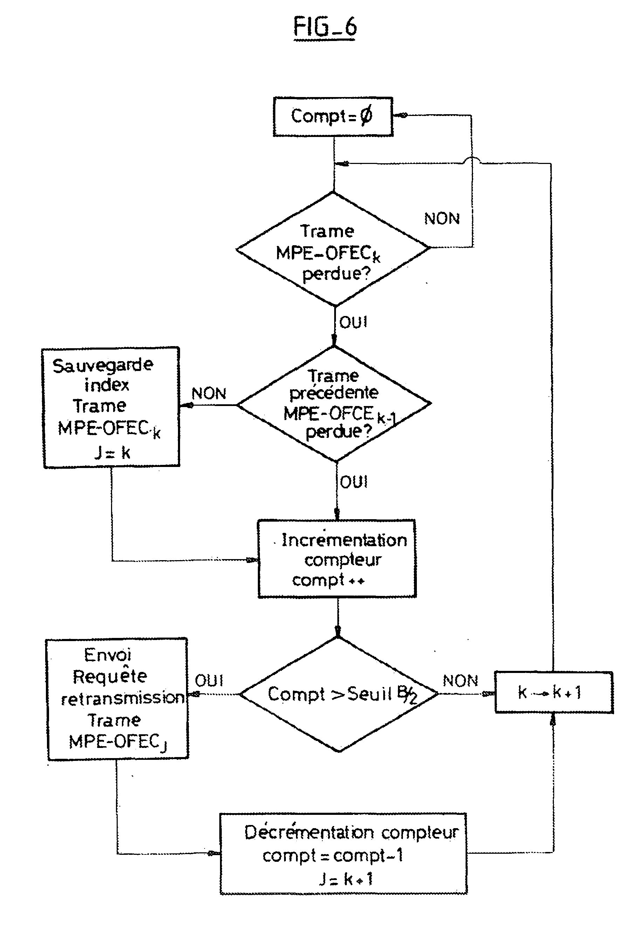

La figure 6 est un exemple d'algorithme pour la mise en oeuvre de l'invention selon un mode de réalisation particulier, qui peut être mis en oeuvre au sein des moyens 407b de traitement couche liaison de données décrits précédemment en coopération avec la mémoire 408.

L'algorithme illustré sur la figure 6 comprend une première étape d'initialisation d'un compteur *compt*. Cette étape d'initialisation est suivie d'une étape de détection pour déterminer si la trame MPE-OFEC$_k$ en cours de traitement a été ou non correctement reçue. Si la trame MPE-OFEC$_k$ en cours de traitement a été correctement reçue, l'algorithme boucle pour revenir à l'étape précédente de réinitialisation du compteur *compt*. S'il est déterminé que la trame MPE-OFEC$_k$ en cours de traitement n'a pas été correctement reçue, l'algorithme détermine si la trame MPE-OFEC$_{k-1}$ précédente n'avait elle aussi pas été correctement reçue. Si la trame MPE-OFEC$_{k-1}$ précédente avait été correctement reçue, on sauvegarde en mémoire 408, par exemple en assignant à une variable *J*, une valeur d'indice identifiant la position de la trame MPE-OFEC$_k$ en cours de traitement dans la séquence (indice noté *k* sur la figure 6), avant d'incrémenter le compteur *compt*. Autrement, si la trame MPE-OFEC$_{k-1}$ précédente n'avait pas été correctement reçue, on incrémente directement le compteur *compt*. Ensuite, on compare la valeur du compteur compt à un seuil prédéterminé égal dans l'exemple illustré sur la figure 6

à $B \times \dfrac{1-T}{T}$ où T désigne le taux de codage de l'encodage « outer FEC » des trames MPE-FEC, et *B* le nombre de trames MPE-FEC sur lesquelles l'encodage « outer FEC » est effectué. Sur l'exemple de la figure 4, le taux de codage de l'encodage « outer FEC » est de 2/3, étant donné qu'on génère 2 blocs de redondance $O_{1,k}$ et $O_{2,k}$ de taille L lignes et C/3 colonnes par encodage de 3 blocs de données de taille L lignes et C/3 colonnes, provenant respectivement des 3 trames MPE-FEC MPE-FEC$_k$, MPE-FEC$_{k+1}$, MPE-FEC$_{k+2}$. Dès lors, le seuil que montre la figure 6 est égal à B/2. Si la valeur du compteur *compt* est supérieure à ce seuil, on génère l'envoi d'une requête de retransmission de la trame MPE-OFEC d'indice correspondant à la valeur consignée précédemment en mémoire (avec les notations de l'exemple précédent la valeur courante de la variable *J*). L'étape d'envoi d'une requête de retransmission est suivie d'une étape de décrémentation du compteur *compt*, et d'incrémentation de la valeur d'indice de trame MPE-OFEC précédemment consignée en mémoire (avec les notations de l'exemple précédent on assigne à la variable *J* la valeur *k+1*). La valeur de l'indice de trame en cours de traitement est ensuite incrémentée et le traitement du segment suivant requis, pour ensuite reboucler vers l'étape de détection précédemment décrite. Si la valeur du compteur *compt* n'est pas supérieure au seuil, la valeur de l'indice identifiant la position de la trame MPE-OFEC en cours de traitement est incrémentée et le traitement en réception d'une nouvelle trame requis pour la trame d'indice celui de la trame MPE-OFEC en cours de traitement augmenté de 1 point, pour enfin reboucler vers l'étape de détection de perte de la trame MPE-OFEC en cours de traitement précédemment décrite.

Il est à noter que l'on pourrait opter pour une valeur de seuil inférieure à $B \times \dfrac{1-T}{T}$, comme par

exemple $B \times \dfrac{1-T}{T} - 1$, afin d'assurer un déclenchement de requête de retransmission encore plus rapidement.

## Revendications

1. Procédé de transmission de données depuis une infrastructure d'un réseau de radiocommunication (20) vers des équipements utilisateur (40), lesdites données étant portées par une séquence de trames diffusées vers les équipements utilisateur, chaque trame comprenant une première section comportant des données et une deuxième section comportant des informations de redondance associées aux données d'un nombre prédéterminé B de trames précédentes dans la séquence, le procédé comprenant les étapes suivantes, relativement à un équipement utilisateur :

   - on compare un nombre de trames consécutives perdues à un seuil dépendant du nombre B de trames précédentes auxquelles lesdites informations de redondance sont associées et des paramètres de l'encodage générant lesdites informations de redondance;
   - on émet vers l'infrastructure de réseau de radiocommunication (30) une requête de retransmission d'au moins une parmi les trames consécutives perdues si le nombre de trames consécutives perdues excède ledit seuil.

2. Procédé selon la revendication 1, dans lequel ledit seuil dépend du nombre B de trames précédentes auxquelles lesdites informations de redondance sont associées et du taux de codage de l'encodage générant lesdites informations de redondance.

3. Procédé selon la revendication 2, dans lequel ledit seuil est choisi égal à : $B \times \dfrac{1-T}{T}$, où T désigne le taux de codage de l'encodage générant lesdites informations de redondance.

4. Procédé selon l'une quelconque des revendications précédentes, dans lequel on émet vers l'infrastructure de réseau de radiocommunication une requête de retransmission de la première trame perdue dans la séquence de trames consécutives perdues si le nombre de trames consécutives perdues excède le seuil.

5. Procédé selon l'une quelconque des revendications précédentes, dans lequel les informations de redondance associées aux données des B trames précédentes dans la séquence sont obtenues par encodage en bloc des données des premières sections des B trames précédentes dans la séquence.

6. Procédé selon l'une quelconque des revendications précédentes, dans lequel l'infrastructure de réseau de radiocommunication comprend une infrastructure de réseau de diffusion de contenu multimédia et une infrastructure de réseau cellulaire de radiocommunication, et les équipements utilisateur sont aptes à recevoir des contenus diffusés par l'infrastructure de réseau de diffusion de contenu multimédia et à communiquer avec infrastructure de réseau cellulaire de radiocommunication, les trames portant les données étant diffusées vers les équipements utilisateur par l'infrastructure de réseau de diffusion de contenu multimédia, et la requête de retransmission d'au moins une parmi les trames consécutives perdues étant émise vers l'infrastructure de réseau cellulaire de radiocommunication.

7. Procédé selon la revendication 6, dans lequel l'infrastructure de réseau de diffusion de contenu multimédia est de type DVB-H ou DVB-SH, et l'infrastructure de réseau cellulaire de radiocommunication est de type UMTS, LTE ou WiMAX.

8. Dispositif de radiocommunication, comprenant des moyens d'émission et de réception pour communiquer avec une infrastructure d'un réseau de radiocommunication (20) transmettant des données vers des équipements utilisateur (40), lesdites données étant portées par une séquence de trames diffusées vers les équipements utilisateur, chaque trame comprenant une première section comportant des données et une deuxième section comportant des informations de redondance associées aux données des B trames précédentes dans la séquence, le dispositif comprenant en outre :

   - des moyens de réception et de décodage desdites trames aptes à déterminer la perte de trames consécutives de la séquence ;
   - des moyens de comparaison du nombre de trames consécutives de la séquence perdues à un seuil dépendant du nombre B de trames précédentes auxquelles lesdites informations de redondance sont associées et des paramètres de l'encodage générant lesdites informations de redondance ;
   - des moyens d'émission vers l'infrastructure de réseau de radiocommunication (30) d'une requête de retransmission d'au moins une parmi les trames consécutives perdues si le nombre de trames consécutives perdues excède ledit seuil.

9. Dispositif selon la revendication 8, dans lequel les moyens de comparaison sont adaptés pour comparer le nombre de trames consécutives perdues à un seuil dépendant du nombre B de trames précédentes auxquelles lesdites informations de redondance sont associées et du taux de codage de l'encodage générant lesdites informations de redondance.

10. Dispositif selon la revendication 9, dans lequel les moyens de comparaison sont adaptés pour comparer le nombre de trames consécutives perdues à un seuil choisi égal à : $B \times \dfrac{1-T}{T}$ , où T désigne le taux de codage de l'encodage générant lesdites informations de redondance.

11. Dispositif selon l'une quelconque des revendications 8 à 10, dans lequel les moyens d'émission sont adaptés pour émettre vers l'infrastructure de réseau de radiocommunication une requête de retransmission de la première trame perdue dans la séquence de trames consécutives perdues si le nombre de trames consécutives perdues excède le seuil.

12. Dispositif selon l'une quelconque des revendications 8 à 11, dans lequel les moyens d'émission et de réception sont aptes à recevoir des contenus multimédia diffusés par une infrastructure de réseau de diffusion de contenu multimédia et à communiquer avec une infrastructure de réseau cellulaire de radiocommunication, les moyens de réception et de décodage des trames étant adaptés pour recevoir et décoder des trames portant des données diffusées vers des équipements utilisateur par l'infrastructure de réseau de diffusion de contenu multimedia, et les moyens d émission vers l'infrastructure de réseau de radiocommunication d'une requête de retransmission étant adaptés pour émettre la requête de retransmission vers l'infrastructure de réseau cellulaire de radiocommunication.

13. Dispositif selon la revendication 12, dans lequel les moyens d'émission et de réception sont aptes à recevoir des contenus multimédia diffusés par une infrastructure de réseau de diffusion de contenu multimédia de type DVB-H ou DVB-SH et à communiquer avec une infrastructure de réseau cellulaire de radiocommunication de type UMTS, LTE ou WiMAX.

14. Station mobile de radiocommunication comprenant un dispositif selon l'une quelconque des revendications 8 à 13.

15. Programme d'ordinateur, changeable dans une mémoire associée à un processeur, et comprenant des instructions pour la mise en oeuvre d'un procédé selon l'une quelconque des revendications 1 à 7 lors de l'exécution dudit programme par le processeur.

16. Support informatique sur lequel est enregistré un programme selon la revendication 15.

**Claims**

1. A method for transmitting data from a radio communication network infrastructure (20) to user devices (40), said data being carried by a sequence of frames broadcast to the user devices, each frame comprising a first section comprising data and a second section comprising redundancy information associated with the data of a predetermined number B of previous frames in the sequence, which method comprises the following steps, related to a user device:

   - a number of consecutive lost frames is compared to a threshold dependent on the number B of previous frames with which said redundancy information is associated and encoding parameters generating said redundancy information;
   - a request to retransmit at least one of the consecutive lost frames is sent to the radio communication network infrastructure if the number of consecutive lost frames exceeds said threshold.

2. A method according to claim 1, wherein said threshold depends on the number B of previous frames with which said redundancy information is associated, and on the coding rate of the encoding generating said redundancy information.

3. A method according to claim 2, wherein said threshold is chosen to be equal to: $B \times \dfrac{1-T}{T}$ , where T refers to the coding rate of the encoding that generates said redundancy information.

4. A method according to any one of the previous claims, wherein a request to retransmit the first lost frame in the sequence of consecutive lost frames is sent to the radio communication network infrastructure if the number of consecutive lost frames exceeds the threshold.

5. A method according to any one of the previous claims, wherein the redundancy information associated with the data of a predetermined number B of previous frames in the sequence is obtained by encoding the first sections of the B previous frames in the sequence into data blocks.

6. A method according to any one of the previous claims, wherein the radio communication network infrastructure comprises a multimedia content broadcast network infrastructure and a cellular radio communication network infrastructure, and the user devices are capable of receiving content broadcast by the multimedia content broadcast network infrastructure and of communicating with the cellular radio communication network infrastructure, the frames carrying the data being broadcast to the user devices by the multimedia content broadcast network infrastructure, and the request to retransmit at least one of the consecutive lost frames being sent to the cellular radio communication network infrastructure.

7. A method according to claim 6, wherein the multimedia content broadcast network infrastructure is DVB-H or DVB-SH, and the cellular radio communication network infrastructure is UMTS, LTE or WiMAX.

8. A radio communication device, comprising sending and receiving means for communicating with a cellular radio communication network infrastructure (20) transmitting data to user devices (40), said data being carried by a sequence of frames broadcast to the user devices, each frame comprising a first section comprising data and a second section comprising redundancy information associated with the data of a predetermined number B of previous frames in the sequence, which device further comprises:

   - means for receiving and decoding said frames, capable of determining the loss of consecutive frames in the sequence;
   - means for comparing the number of consecutive lost frames in the sequence with a threshold dependent on the number B of previous frames with which said redundancy information is associated and on the parameters of the encoding generating said redundancy information;
   - a request to retransmit at least one of the consecutive lost frames is sent to the radio communication network infrastructure if the number of consecutive lost frames exceeds said threshold.

9. A device according to claim 8, wherein the comparison means are adapted to compare the number of consecutive lost frames to a threshold dependent on the number B of previous frames with which said redundancy information is associated, and the coding rate of the encoding generating said redundancy information.

10. A device according to claim 9, wherein the comparison means are adapted to compare the number of consecutive lost frames to a chosen threshold equal

to: $B \times \dfrac{1-T}{T}$ , where T refers to the coding rate of the encoding that generates said redundancy information.

11. A device according to any one of the claims 8 to 10, wherein the sending means are adapted to send a request to retransmit the first lost frame in the sequence of consecutive lost frames to the radio communication network infrastructure if the number of consecutive lost frames exceeds the threshold.

12. A device according to any one of the claims 8 to 11, wherein the means for sending and receiving are capable of receiving multimedia content broadcast by a multimedia content broadcast network infrastructure and of communicating with a cellular radio communication network infrastructure, the means for receiving and decoding the frames are adapted to receive and decode frames carrying data broadcast to the user devices by the multimedia content broadcast network infrastructure, and the means for sending a retransmission request to the radio communication network infrastructure are adapted to send the retransmission request to the cellular radio communication network infrastructure.

13. A device according to claim 12, wherein the means for sending and receiving are capable of receiving multimedia content broadcast by a DVB-H or DVB-SH multimedia content broadcast network infrastructure, and are capable of communicating with a cellular radio communication network infrastructure may be UMTS, LTE or WiMAX.

14. A radio communication mobile station comprising a device according to any one of the claims 8 to 13. 13.

15. A computer program, which may be loaded into a memory associated with a processor, comprising instructions for implementing a method according to any one of the claims 1 to 7 when said program is executed by the processor.

16. A data-processing medium on which is recorded a program according to claim 15.

**Patentansprüche**

1. Verfahren zur Übertragung von Daten von einer Infrastruktur eines Funkkommunikationsnetzwerks (20) an Benutzergeräte (40), wobei die besagten Daten in einer Sequenz von an die Benutzergeräte übertragenen Rahmen transportiert werden, wobei jeder Rahmen einen ersten Abschnitt mit Daten und einen zweiten Abschnitt mit Redundanzinformationen, die mit den Daten einer vorbestimmten Anzahl B von in der Sequenz vorangehenden Rahmen assoziiert sind, enthält, wobei das Verfahren die folgenden Schritte in Bezug auf ein Benutzergerät umfasst:

   - man vergleicht eine Anzahl von aufeinanderfolgenden verlorenen Rahmen mit einem Grenzwert, welcher von der Anzahl B der vorangehenden Rahmen, mit welchen die besagten Redundanzinformationen assoziiert sind, und von den Parametern der Codierung, welche die besagten Redundanzinformationen erzeugt, abhängt;

- man sendet eine Anforderung für die Wiederholung der Übertragung mindestens eines der aufeinanderfolgenden verlorenen Rahmen an die Infrastruktur des Funkkommunikationsnetzwerks (30), wenn die Anzahl der aufeinanderfolgenden verlorenen Rahmen den besagten Grenzwert überschreitet.

2. Verfahren nach Anspruch 1, wobei der besagte Grenzwert von der Anzahl B der on vorangehenden Rahmen, mit welchen die besagten Redundanzinformationen assoziiert sind, und von der Coderate der Codierung, welche die besagten Redundanzinformationen erzeugt, abhängt.

3. Verfahren nach Anspruch 2, wobei der besagte Grenzwert derart gewählt wird, dass er

$$B \times \frac{1-T}{T}$$ entspricht, wobei T die Coderate der Codierung, welche die besagten Redundanzinformationen erzeugt, darstellt.

4. Verfahren nach einem beliebigen der vorstehenden Ansprüche, wobei man eine Anforderung für die Wiederholung der Übertragung des ersten verlorenen Rahmens in der Sequenz der aufeinanderfolgenden verlorenen Rahmen an die Infrastruktur des Funkkommunikationsnetzwerks sendet, wenn die Anzahl der aufeinanderfolgenden verlorenen Rahmen den Grenzwert überschreitet.

5. Verfahren nach einem beliebigen der vorstehenden Ansprüche, wobei die mit den Daten der B vorangehenden Rahmen in der Sequenz assoziierten Redundanzinformationen durch die Blockcodierung der Daten der ersten Abschnitte der B in der Sequenz vorangehenden Rahmen erhalten werden.

6. Verfahren nach einem beliebigen der vorstehenden Ansprüche, wobei die Infrastruktur des Funkkommunikationsnetzwerks eine Infrastruktur des Netzwerks für die Übertragung von Multimedia-Inhalt und eine Infrastruktur des zellularen Funkkommunikationsnetzwerks umfasst, und wobei die Benutzergeräte dazu geeignet sind, von der Infrastruktur des Netzwerks für die Übertragung von Multimedia-Inhalt übertragene Inhalte zu empfangen und mit der Infrastruktur des zellularen Funkkommunikationsnetzwerks zu kommunizieren, wobei die Rahmen, welche die Daten transportieren, über die Infrastruktur des Netzwerks für die Übertragung von Multimedia-Inhalt an die Benutzergeräte übertragen werden und die Anforderung für die Wiederholung der Übertragung mindestens eines der aufeinanderfolgenden verlorenen Rahmen an die Infrastruktur des zellularen Funkkommunikationsnetzwerks gesendet wird.

7. Verfahren nach Anspruch 6, wobei die Infrastruktur des Netzwerks für die Übertragung von Multimedia-Inhalt vom Typ DVB-H oder DVB-SH ist, und wobei die Infrastruktur des zellularen Funkkommunikationsnetzwerks vom Typ UMTS, LTE oder WiMAX ist.

8. Funkkommunikationseinrichtung mit Sende- und Empfangsmitteln zum Kommunizieren mit einer Infrastruktur eines Funkkommunikationsnetzwerks (20), welche Daten an Benutzergeräte (40) überträgt, wobei die besagten Daten in einer Sequenz von an die Benutzergeräte übertragenen Rahmen transportiert werden, wobei jeder Rahmen einen ersten Abschnitt mit Daten und einen zweiten Abschnitt mit Redundanzinformationen, die mit den Daten der B in der Sequenz vorangehenden Rahmen assoziiert sind, enthält, wobei die Einrichtung weiterhin umfasst:

- Mittel zum Empfangen und Decodieren der besagten Rahmen, welche fähig sind, den Verlust von in der Sequenz aufeinanderfolgenden Rahmen zu ermitteln;
- Mittel zum Vergleichen der Anzahl der in der Sequenz aufeinanderfolgenden verlorenen Rahmen mit einem Grenzwert, welcher von der Anzahl B der vorangehenden Rahmen, mit welchen die besagten Redundanzinformationen assoziiert sind, und von den Parametern der Codierung, welche die besagten Redundanzinformationen erzeugt, abhängt;
- Mittel zum Senden einer Anforderung für die Wiederholung der Übertragung mindestens eines der aufeinanderfolgenden verlorenen Rahmen an die Infrastruktur des Funkkommunikationsnetzwerks, wenn die Anzahl der aufeinanderfolgenden verlorenen Rahmen den besagten Grenzwert überschreitet.

9. Einrichtung nach Anspruch 8, wobei die Mittel zum Vergleichen dazu geeignet sind, die Anzahl der aufeinanderfolgenden verlorenen Rahmen mit einem Grenzwert, welcher von der Anzahl B der vorangehenden Rahmen, mit welchen die besagten Redundanzinformationen assoziiert sind, und von der Coderate der Codierung, welche die besagten Redundanzinformationen erzeugt, abhängt, zu vergleichen.

10. Einrichtung nach Anspruch 9, wobei die besagten Mittel zum Vergleichen dazu geeignet sind, die Anzahl der aufeinanderfolgenden verlorenen Rahmen mit einem Grenzwert, welcher derart gewählt wird,

dass er $B \times \dfrac{1-T}{T}$ entspricht, wobei T die Coderate der Codierung, welche die besagten Redundanzinformationen erzeugt, darstellt, zu vergleichen.

**11.** Einrichtung nach einem beliebigen der Ansprüche 8 bis 10, wobei die Sendemittel dazu geeignet sind, eine Anforderung für die Wiederholung der Übertragung des ersten verlorenen Rahmens in der Sequenz von aufeinanderfolgenden verlorenen Rahmen an die Infrastruktur des Funkkommunikationsnetzwerks zu senden, wenn die Anzahl der aufeinanderfolgenden verlorenen Rahmen den Grenzwert überschreitet.

**12.** Einrichtung nach einem beliebigen der Ansprüche 8 bis 11, wobei die Sende- und Empfangsmittel dazu geeignet sind, von der Infrastruktur des Netzwerks für die Übertragung von Multimedia-Inhalt übertragene Multimedia-Inhalte zu empfangen und mit der Infrastruktur des zellularen Funkkommunikationsnetzwerks zu kommunizieren, wobei die Mittel zum Empfangen und Decodieren von Rahmen dazu geeignet sind, Rahmen, welche die von der Infrastruktur des Netzwerks für die Übertragung von Multimedia-Inhalt an Benutzergeräte übertragenen Daten transportieren, zu empfangen und zu decodieren, und wobei die Mittel zum Senden einer Anforderung für die Wiederholung der Übertragung an die Infrastruktur des Funkkommunikationsnetzwerks dazu geeignet sind, die Anforderung für die Wiederholung der Übertragung an die Infrastruktur des zellularen Funkkommunikationsnetzwerks zu senden.

**13.** Einrichtung nach Anspruch 12, wobei die Sende- und Empfangsmittel dazu geeignet sind, von der Infrastruktur des Netzwerks für die Übertragung von Multimedia-Inhalt vom Typ DVB-H oder DVB-SH übertragene Multimedia-Inhalte zu empfangen und mit einer Infrastruktur des zellularen Funkkommunikationsnetzwerks vom Typ UMTS, LTE oder WiMAX zu kommunizieren.

**14.** Mobile Funkkommunikationsstation mit einer Einrichtung gemäß einem beliebigen der Ansprüche 8 bis 13.

**15.** Computerprogramm, welches in einen mit einem Prozessor assoziierten Speicher geladen werden kann und Befehle für das Durchführen eines Verfahrens gemäß einem beliebigen der Ansprüche 1 bis 7 bei der Ausführung des besagten Programms durch den Prozessor enthält.

**16.** Computerlesbares Medium, auf welchem ein Programm gemäß Anspruch 15 gespeichert ist.

FIG_1

EP 2 193 620 B1

## FIG_2

201

DVB-H/DVB-SH   IPE

202        203        204

Flux IP → | MPE | — | Encodage FEC | — | TS | → Bursts

## FIG_3

101                          102

Flux IP
entrant →                                    ADT

191 colonnes                    RSDT

C

L

P

## FIG_4

FIG_5

## FIG_6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2006128422 A

- WO 2007060589 A

**Littérature non-brevet citée dans la description**

- *A satellite based multicast layer architecture for mobile networks to provide efficient spectrum usage of IMT2000 bands,* Janvier 2002, cordis.europa.eu/ist/ka4/mobile/password/02/20_aspi_ecc_pt1_35.pdf